# EUROPÄISCHE PATENTSCHRIFT

(11) **EP 1 153 144 B1**
(45) Veröffentlichungstag und Bekanntmachung des Hinweises auf die Patenterteilung: **30.07.2003**
(21) Anmeldenummer: 00904890.1
(22) Anmeldetag: 11.01.2000
(51) Int. Cl.: C21C 5/52

(54) **VORRICHTUNG ZUM VORWÄRMEN VON SCHROTT**
DEVICE FOR PREHEATING SCRAP
DISPOSITIF POUR LE PRECHAUFFAGE DES FERRAILLES

(30) Priorität: 22.01.1999 DE 19902438
(43) Veröffentlichungstag der Anmeldung: 14.11.2001
(73) Patentinhaber: SMS SCHLOEMANN-SIEMAG AKTIENGESELLSCHAFT, 40237 Düsseldorf (DE)
(72) Erfinder: NÖRTHEMANN, Ralf, D-45549 Sprockhövel (DE); SCHUBERT, Manfred, D-46147 Oberhausen (DE)
(74) Vertreter: Valentin, Ekkehard, Dipl.-Ing.
(86) Internationale Anmeldenummer: EP0000113
(87) Internationale Veröffentlichungsnummer: WO00043554

(56) Entgegenhaltungen:
- EP-A- 0 511 194
- EP-A- 0 646 758
- WO-A-99/28513
- US-A- 4 691 899
- US-A- 4 708 642

## Beschreibung

Die Erfindung betrifft eine Vorrichtung zum Vorwärmen von Schrott vor dessen Zuführen in einen metallurgischen Ofen, hauptsächlich unter Ausnutzung von zurückgewonnener Wärme heißer Abgase, die beim Schmelzprozeß im metallurgischen Ofen entstehen und aus der Ofenauslaßöffnung emittiert werden.

Um der Forderung nach einer höheren Produktionsrate bei gleichzeitiger Energieeinsparung sowie Umweltentlastung bei der direkten Stahlherstellung in Elektrolichtbögenöfen zu entsprechen, ist es Stand der Technik, kalten Schrott als Eisenschrottmischung oder Stahlschrott sowie direkt reduziertes Eisen (DRI) oder hot briquetted iron (HBI) mittels der heißen Abgase, die beim Schmelzprozeß freigesetzt werden, vorzuwärmen zum anschließenden energieeffrzienteren, rascheren Einschmelzen der vorgewärmten Charge im Ofen.

Bei der Mehrheit der bekannten konventionellen Schrottvorwärmvorrichtungen kommt es zu einer gegenläufigen Strömung der heißen Abgase zu der Strömung bzw. Bewegungsrichtung des Schrotts. Im Gegensatz hierzu ist aus der noch nicht veröffentlichten PCT-Anmeldung WO-A- 99 28 513 eine Vorrichtung und ein Verfahren als interner Stand der Technik bekannt mit gleichgerichteter Strömung von Schrott und heißen Abgasen sowie gestufter Nachverbrennung der Ofenabgase. Es wird ein semikontinuierliches, selbstchargierendes Vorwärmen einer Kalteisenschrottmischung bzw. Stahlschrott beschrieben mit einem Entladevorgang von vorgewärmten Schrott in einen angrenzenden, in Tamdemanordnung arbeitenden metallurgischen Ofen.

im einzelnen ist eine Vorwärmvorrichtung zum Vorwärmen einer Eisenschrottmischung vor dem Zuführen des Schrotts in einen metallurgischen Ofen, hauptsächlich unter Ausnutzen von zurückgewonnener Wärme aus heißen Abgasen, die aus der Ofenauslaßöffnung emittiert wurden, bekannt zum gleichzeitigen Reduzieren von schädlichen Stoffen aus dem Schrott und aus den Abgasen, mit einer Kammer, die eine obere Abteilung mit Kaltschrotteingabemitteln aufweist zum Deponieren von kaltem Schrott in der oberen Abteilung sowie eine untere Abteilung mit Entlademitteln für den erwärmten Schrott zum Zuführen des erwärmten Schrotts in den Ofen und einen Abgasauslaß für das verbrauchte Abgas sowie gasdurchlässige Gattermittel zwischen den Abteilungen der Kammer, die zwischen einer geschlossenen und geöffneten Position verfahrbar sind, zum Aufnehmen von Schrott und Tragen in der geschlossenen Position während einer bestimmten Verweilzeit, während heißes Abgas aus dem Heißgaseinlaß in die obere Abteilung strömt und durch die Schrottcharge sowie die geschlossenen Gattermittel in die untere Abteilung dringt, sowie mit Mitteln zum Steuern der gasdurchlässigen Gattermittel zum Öffnen und Herabfallen des Schrotts in die untere Abteilung und einen Heißabgaseinlaß in Strömungsverbindung mit der Ofenauslaßöffnung.

Bei den Kaltschrotteingabemittel handelt es sich um ein Schrägaufzugsystem, bestehend aus einer schrägen Heberampe zwischen einem Schrottlager und der Chargieröffnung der oberen Abteilung der Kammer sowie einem Chargierkübel, der, angetrieben von einer Hubeinrichtung, auf der Heberampe zwischen einer Beladeposition und Entladeposition hin- und herfährt.

Zum abdichtenden Verschließen ist die Kammer mit einem wassergekühlten Verschluß versehen. Dieser wird beim Chargiervorgang geöffnet. Um während des Chargiervorgangs dennoch ein abgedichtetes System zu gewährleisten und ein Eindringen einer großen Menge von unerwünschter Falschluft zu verhindern, wird vorgeschlagen, daß die Außenwände des Chargierbehälters in Angrenzung mit sich von der Öffnung aus erstreckenden Kanten kommen.

Diese vorgeschlagene Art der Abdichtung sowie Chargierweise erweist sich aber als nachteilig. Da ein vollständiges Abdichten des Spaltes zwischen den Bewandungen des Beschickungsbehälters und dem Abdeckblech der Chargieröffnung praktisch nicht möglich ist, findet ein unkontrollierter Gaseintritt in die Kammer beim Chargiervorgang statt.

Zum zweiten kommt es zu einer schlechten Schrottverteilung in der oberen Kammerabteilung, was eine eingeschränkte Vorwärmung des Schrotts und somit einen schlechteren Wirkungsgrad der Vorwärmkammer bedingt. Ferner muß das Füllvolumen des einen schnell hin- und herbewegbaren Beschickungsbehälters zur ausreichenden Beschickung der Kammer so groß sein, daß dieser nicht mehr handhabbar ist. Des weiteren kommt es bei einem Ausfall des Schrägaufzuges zu einem kompletten Stillstand des Vorwärmsystems.

Der Erfindung liegt demnach die Aufgabe zugrunde, eine Vorrichtung zum Vorwärmen von Schrott bereitzustellen, die die vorgenannten Nachteile vermeidet.

Diese Aufgabe wird mittels einer Vorrichtung mit den Merkmalen der Anspruchs 1 gelöst. Vorteilhafte Ausgestaltungen sind in den Unteransprüchen offenbart.

Grundgedanke der Erfindung ist es, an der oberen Abteilung der Kammer eine Vorkammer vorzusehen. Die Vorkammer soll mindestens eine erste verschließbare Öffnung zur oberen Kammerabteilung sowie mindestens eine weitere zweite verschließbare Öffnung zum Einführen von kaltem Schrott mittels der Zuführmittel aufweisen. Die Vorkammer ist geeignet, die jeweilige Charge gänzlich oder in Teilmengen aufzunehmen. Es sind Mittel zur kontrollierten Änderung der Gas-, Druck- undloder Temperaturverhältnisse in der Vorkammer vorgesehen, wobei die Öffnungen der Vorkammer in Zusammenwirkung mit den genannten Änderungsmitteln für die Gas- und Druckverhältnisse im Sinne einer Schleuse betätigbar sind.

Durch das Vorsehen einer Vorkammer, die als Schleuse dient, wird ein Falschlufteintritt vermieden bzw. kontrollierbar und damit die Gefahr einer explosiven Atmosphäre reduziert.

Die US-A- 4 691 899 beschreibt einen vom Abgas eines metallurgischen Ofens beheizten Schacht zum Vorwärmen von in der Ofen zu Chargierendern Schrott; der Schacht weist obere und untere Abteilungen auf, die durch öffenbare Gattermittel getrennt sind, und Schrott und Abgas durchlaufen der Schacht in derselben Richtung. An die obere Abteilung des Schachtes schließt eine davon eben so durch Gattermittel getrennte Vorkammer an zum Einführen einer Charge von kalten Schrott. Die Gas-, Druck - und/oder Temperatur - Bedingungen in der Vorkammer, die gegenüher der oberen Schachtabteilung nicht dicht abschließbar ist, sind nicht gesondert steuerbar.

Erfindungsgemäß wird des weiteren bevorzugt, daß die Zuführmittel für die kalte Eisenschrottmischung ein Beschickungsbehälter-Schrägaufzugsystem umfassen, das sich zusammensetzt aus mindestens einem, vorzugsweise zwei Schrägaufzügen, die mit jeweils einem permanenten Schrottbeschickungsbehälter ausgerüstet sind, der von der Vorkammer vollständig aufnehmbar ist.

Entsprechend kann es sich bei den Zuführmitteln für die kalte Eisenschrottmischung um ein Beschickungsbehälter-Kransystem handeln, das sich zusammensetzt aus einem Lastkran mit Verbindungsvorrichtungen für einen, vorzugsweise für zwei, Beschickungsbehälter sowie mit Mitteln zur vertikalen und horizontalen Verfahrbewegung des jeweiligen Beschickungsbehälters. Falls zwei Beschickungsbehälter vorliegen, wird das Vorwärmsystem unabhängig von dem Ausfall eines Beschickungsbehälters. Durch Befüllen der oberen Kammerabteilung von vorzugsweise zwei Stellen wird zudem eine bessere Verteilung des Schrotts gewährleistet.

Der Verfahrweg und/oder Kippweg der Beschickungsbehälter ist steuerbar und vorzugsweise diskontinuierlich in bestimmten Positionen einstellbar, um über eine oder mehrere Anfahrpositionen den Entleervorgang zu vereinfachen.

Vorzugsweise wird vorgeschlagen, daß der oder die mittels des Kransystems geförderten Beschickungsbehälter durch eine Kippbewegung in die obere Kammerabteilung entleerbar sind.

Alternativ sind die mittels des Kransystems geförderten Beschickungsbehälter mit einem lösbaren Boden versehen, der in der Entladeposition zum Entleeren horizontal verschiebbar ist, oder mit einem nach unten aufklappbaren Boden.

Vorteilhafterweise sind Mittel zur Gewichts- und/oder Füllstandsüberwachung der Schrottmenge in den gefüllten Beschickungsbehältem vorgesehen. Die Wiegung sowie die Fültstandsüberwachung findet auf dem Hüttenflur statt.

Bei einer bevorzugten Ausführungsform setzt sich die obere Kammerabteilung in einen Entladebereich sowie einen Schrottsammelbereich oberhalb der ersten Gattermittel zusammen, wobei der Entladebereich eine sich vertikal erstreckende Trennwand autweist und wobei in den ersten sowie zweiten Teil des Entladebereichs jeweils abwechselnd Heißgas eingeleitet und Schrott chargiert wird. Auf diese Weise wird erreicht, daß die jeweils aktivierten Verfahr- und Kippkonstruktionen für zwei Beschickungsbehälter nicht dem heißen Abgas ausgesetzt sind, und es wird eine längere Standzeit der Beschickungsbehälter erreicht. Vorzugsweise ist in die Führung zum Einleiten von heißem Abgas eine Vorrichtung zur gezielten Gasleitung eingesetzt, beispielsweise Klappen o.a.

Die Gatter zwischen den Kammerabteilungen bestehen vorzugsweise aus fingerartigen Elementen, die in zwei gegenüberliegend spiegelbildlich Reihen angeordnet sind. Die Schwenkmittel für die fingerartigen Elemente sind vorzugsweise an der Kammerwand angeordnet, die dem Elektroofen zugewandt ist bzw. an der gegenüberliegenden. Bei einer Kammer mit rechteckigem Format verläuft der Spalt zum Durchfallen des Schrotts annähernd im rechten Winkel zu der Verbindungslinie von Ofen und Vorwärmvorrichtung, die nebeneinanderstehen. Diese Anordnung ist vorteilhaft, weil durch Erhöhung der Anzahl der nebeneinander angeordneten Gatterfinger die Fläche des Gatters vergrößert werden kann. Ferner wird durch diese Anordnung eine gleichmäßigere Schrottverteilung bewirkt.

Eine Anordnung der Schwenkmittel an den beiden Kammerwänden, die parallel der Verbindungslinie von Ofen und Vorwärmvorrichtung verlaufen, erweist sich als unvorteilhaft. Da die Flächenausdehnung der Kammer zwischen Ofen und Beschickungssystem begrenzt ist, wäre eine Variation der Gattergröße nur über eine Vergrößerung der Fingerlänge erreichbar, was sich als nicht durchführbar erweist, da die Fingerlänge nicht unbegrenzt erweiterbar ist.

Weitere Einzelheiten und Vorteile der Erfindung ergeben sich aus den Ansprüchen und der nachfolgenden Beschreibung: Hierbei zeigen:
- Figur 1: eine geschnittene Längsansicht A-A von Figur 2 eines Elektrolichtbogenofens mit einer Vorwärmvorrichtung mit Vorkammer und einer ersten Art eines Beschickungsbehälter-Kransystems;
- Figur 2: eine Draufsicht des Elektrotichtbogenofens sowie der Vorwärmvorrichtung nach Figur 1;
- Figur 3: die Schnittansicht B-B der Figur 1;
- Figur 4: eine geschnittene Längsansicht einer zweiten Ausführungsform einer Vorwärmvorrichtung mit geteilter oberer Kammerabteilung und einer ersten Art des Beschickungsbehälter-Kransystem;

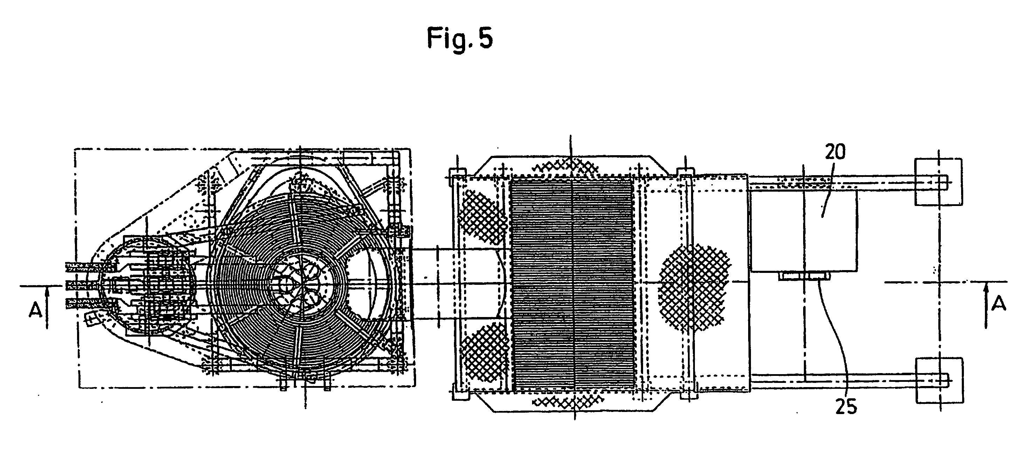

- Figur 5: eine Draufsicht des Elektrolichtbogenofens sowie der Vorwärmvorrichtung nach Figur 4
- Figur 6: die Schnittansicht B-B der Figur 4;
- Figur 7: eine geschnittene Längsansicht einer dritten Ausführungsform einer Vorwärmvorrichtung mit geteilter oberer Kammerabteilung und einer zweiten Art des Beschickungsbehälter-Kransystems;

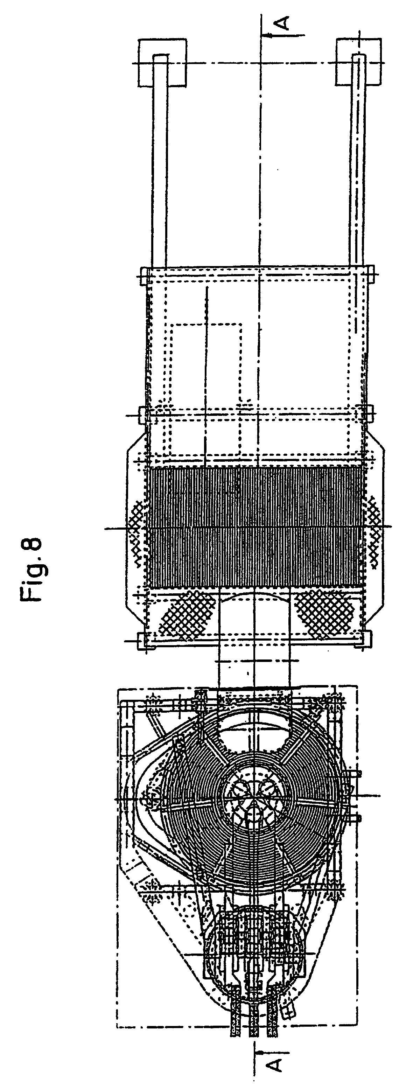

- Figur 8: eine Draufsicht des Elektrolichtbogenofens sowie der Vorwärmvorrichtung nach Figur 7;

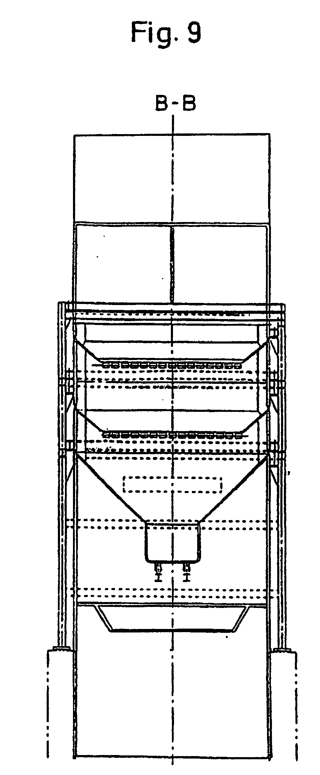

- Figur 9: die Schnittansicht B-B der Figur 7;
- Figur 10: eine geschnittene Längsansicht einer vierten Ausführungsform einer Vorwärmvorrichtung mit geteilter oberer Kammerabteilung und einem Beschickungsbehälter-Schrägaufzugsystem;

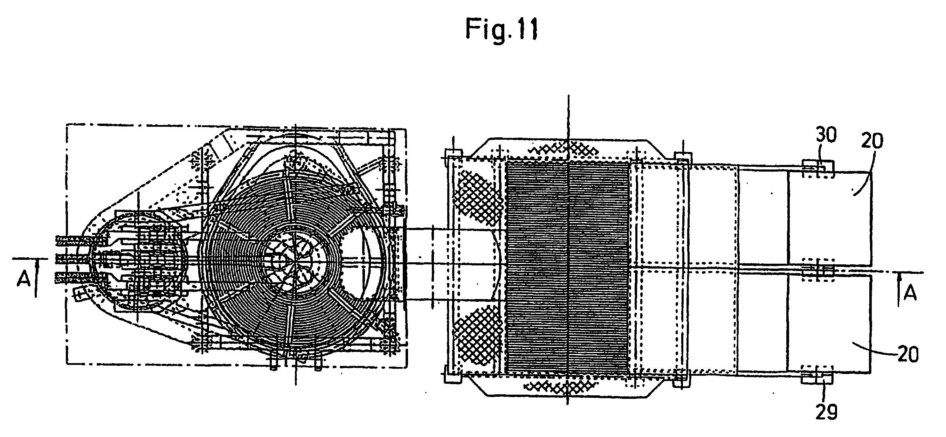

- Figur 11: eine Draufsicht des Elektrolichtbogenofens sowie der Vorwärmvorrichtung nach Figur 10;

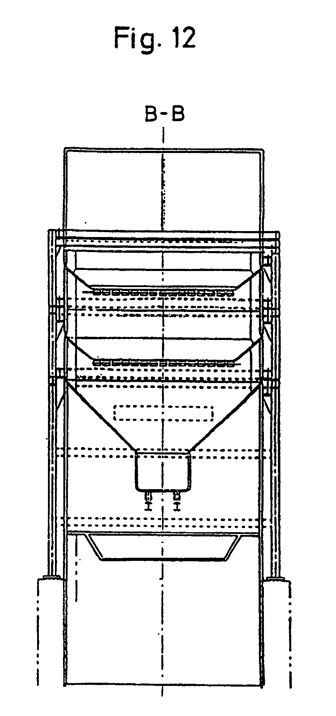

- Figur 12: die Schnittansicht B-B der Figur 10;
- Figur 13: eine geschnittene Längsansicht einer fünften Ausführungsform einer Vorwärmvorrichtung mit geteilter oberer Kammerabteilung und einer ersten Art des Beschickungsbehälter-Kransystem;
- Figur 14: eine Draufsicht des Elektrolichtbogenofens sowie der Vorwärmvorrichtung nach Figur 13;
- Figur 15: die Schnittansicht B-B der Figur 13.

Die Schrottvorwärmvorrichtung umfaßt zwei Grundkomponenten, eine Schrottvorwärmvorrichtung 1 und einen angrenzenden Lichtbogenofen 2. Die Schrottvorwärmvorrichtung umfaßt eine Kammer 3 mit Vorkammer 4, ein Beschickungsbehälter-Fördersystem 5 sowie ein System 6 zum Einführen des erwärmten Schrotts 7 in den Elektrolichtbogenofen 2.

Die Kammer 3 ist in drei Abteilungen unterteilt, nämlich in eine obere Abteilung 8, eine untere Abteilung 9 sowie eine mittlere Abteilung 10. Die Abteilungen werden getrennt durch gasdurchlässige Gatter 11a und 11b. Durch eine gesteuerte Durchlaßbewegung von Schrott 7 durch die Gatter bewegt sich das Schrottmaterial semikontinuierlich durch die Kammer 3.

Der Ofen 2 weist einen Abgasauslaß 12 auf, der mit einem Gasströmungsrohr 13 verbunden ist, das die heißen Abgase in ein Rohr 14 führt. Das Rohr 14 ist mit einer Einlaßöffnung für Heißgas 15 in der oberen Kammerabteilung 8 verbunden. Es ist ein weiteres Rohr 16 zur Verbindung der unteren Abteilung 9 der Kammer mit dem Rohr 14 vorhanden.

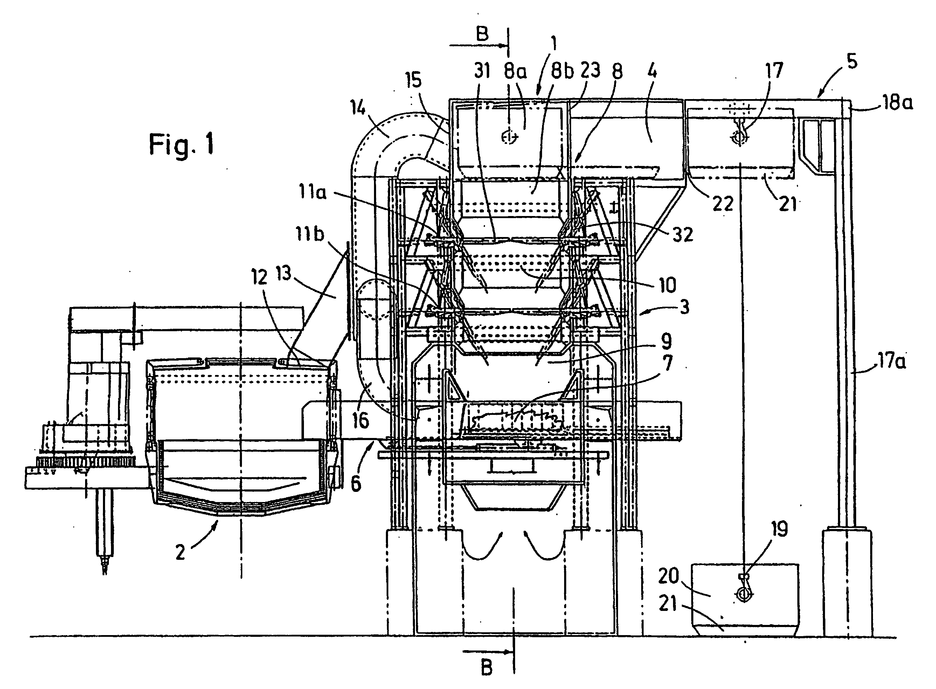

Eine erste Art des Beschickungsbehälter-Fördersystems umfaßt ein Kransystem 17. Dieses umfaßt nach Figur 1 eine Konstruktion aus zwei vertikal angeordneten Streben 17a und 17b sowie zwei horizontal angeordneten Streben 18a und 18b, die in die Vorkammer 4 hineinreichen. Es ist ein Seilzug mit Haken 19 vorgesehen, der als Kran vertikal und horizontal verfahrbar ist. Ein einzelner Beschikkungsbehälter 20 wird in einer Beladeposition mit Schrott befüllt und vertikal in eine benachbarte Position zur Vorkammer 4 gefahren. In dieser Position wird die Vorkammer 4 geöffnet und der Beschickungsbehälter mittels des Krans in die Vorkammer hineingefahren.

Die Vorkammer 4 ist auf gleicher Höhe mit der oberen Kammerabteilung 8, benachbart zu dieser, angeordnet. Die obere Kammerabteilung 8 setzt sich aus einem Entladebereich 8a für den Beschickungsbehälter sowie einem Sammelbereich 8b zusammen, der der mittleren Kammerabteilung 10 entspricht. Sie weist eine erste verschließbare Öffnung 22 sowie eine zweite Öffnung 23 auf. Die Öffnungen 22 und 23 werden als Schleusenöffnungen gesteuert. Nachdem ein Beschickungsbehälter 20 in die Vorkammer eingefahren ist, wird die Öffnung 22 geschlossen und die Verhältnisse der Schleuse an die Verhältnisse der oberen Kammerabteilung angepaßt. Nach erfolgter Anpassung wird die zweite Öffnung 23 geöffnet. Der Beschickungsbehälter wird in den Teil 8a der oberen Kammerabteilung gefahren, arretiert und durch horizontales Verschieben seiner lösbaren Bodenplatte 21 entleert. Das Herausfahren des Behälters erfolgt entsprechend.

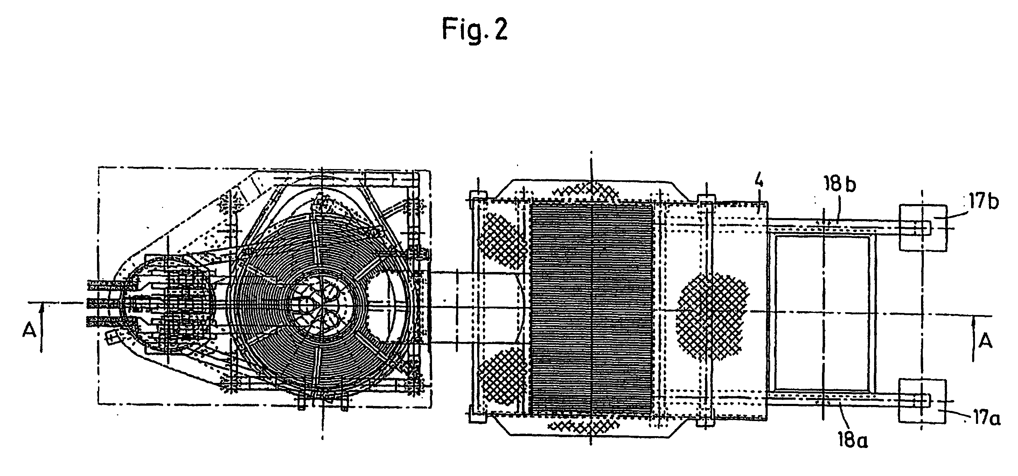

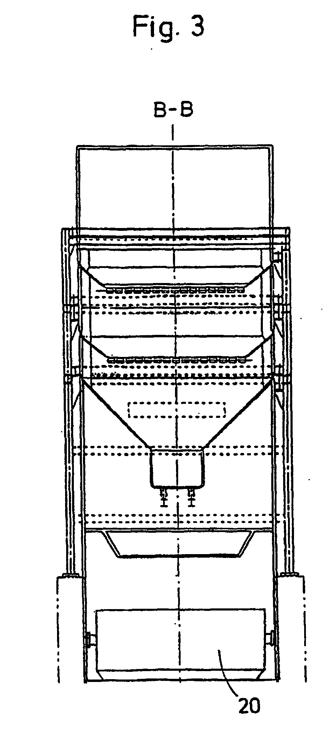

Die Figuren 2 und 3 verdeutlicht die Vorkammer 4 sowie den Beschickungsbehälter 20.

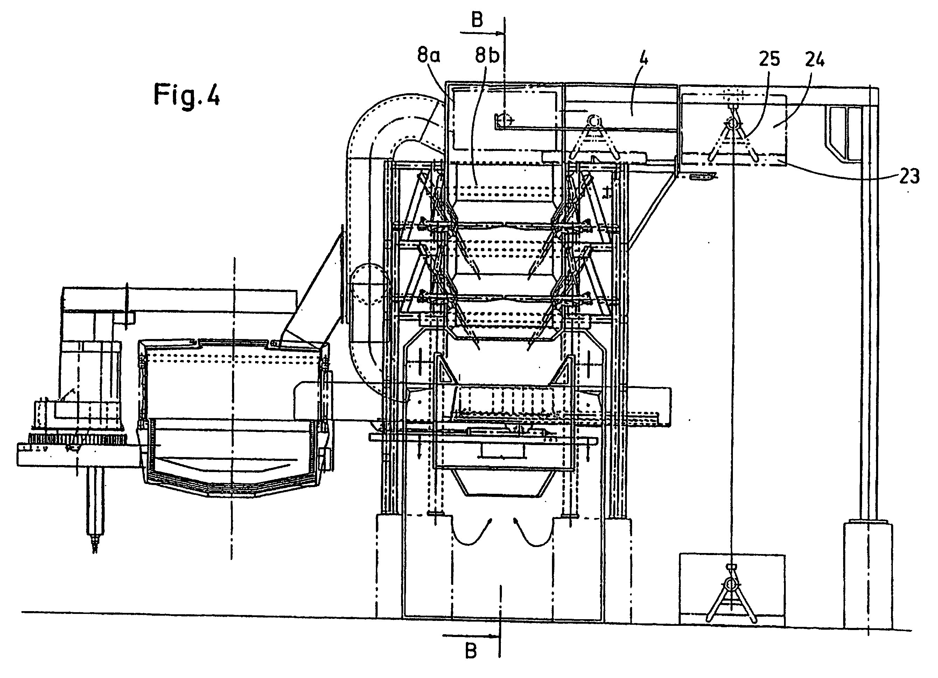

Das Beschickungsbehälter-Fördersystem der Ausführungsform nach Figur 4 entspricht vom Prinzip her demjenigen nach Figur 1. Der jeweilige Beschickungsbehälter setzt sich aus einer Bodenplatte 23 und einem Blechkasten 24 zusammen, wobei die Bodenplatte Angriffsmittel 25 für den Kran aufweist. Bodenplatte und Angriffsmittel werden nach Arretierung des Blechkastens in der oberen Kammerabteilung zurückgefahren.

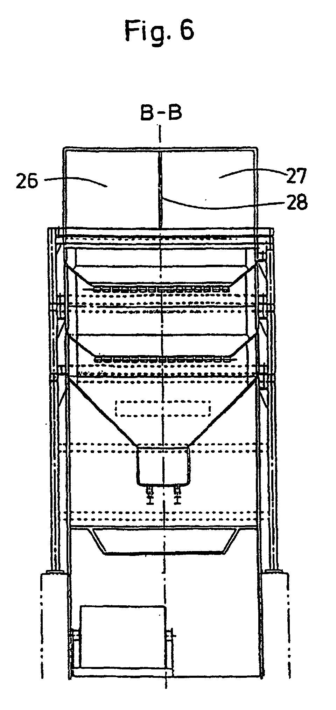

Bei der Ausführungsform nach Figur 4 ist der Entladebereich 8a für den Beschikkungsbehälter der oberen Kammerabteilung 8 in zwei Zonen 26 und 27 mittels einer Trennschicht 28 geteilt (deutlich gezeigt in Figur 6). Es sind in diesem Fall zwei Öffnungen an der Verbindung zwischen Vorkammer und oberen Kammerabteilung vorgesehen, durch die in abwechselnder Reihenfolge mit zwei Behältern beschickt werden kann. Diese Trennschicht 28 reicht aus zum gerichteten Strömen der Heißgase in den unteren Teil der Kammer und weg von der jeweiligen Öffnung in der oberen Kammerabteilung, durch die gerade beschickt wird. Das Kransystem fördert die Beschickungsbehälter 20, wovon beispielhaft einer gezeigt ist.

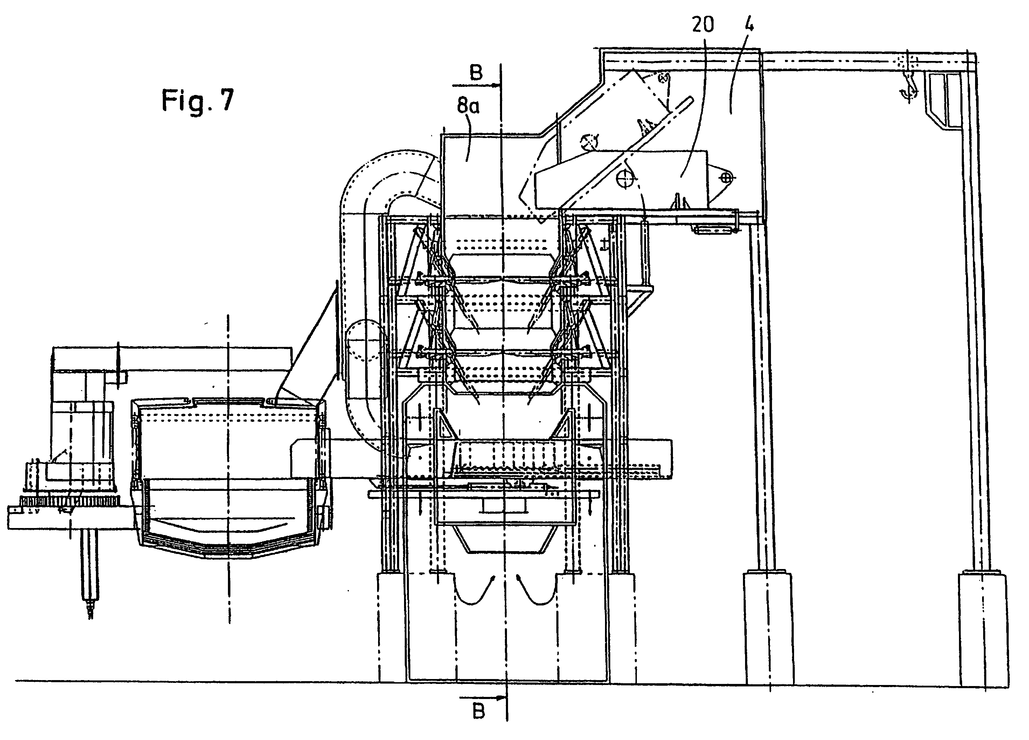

Figur 7 zeigt eine zweite Art der Beschickung über ein Chargier-Kransystem. Der Beschickungsbehälter 20 wird über einen Kran in die Vorkammer 4 gefördert und durch eine Schwenkbewegung entleert.

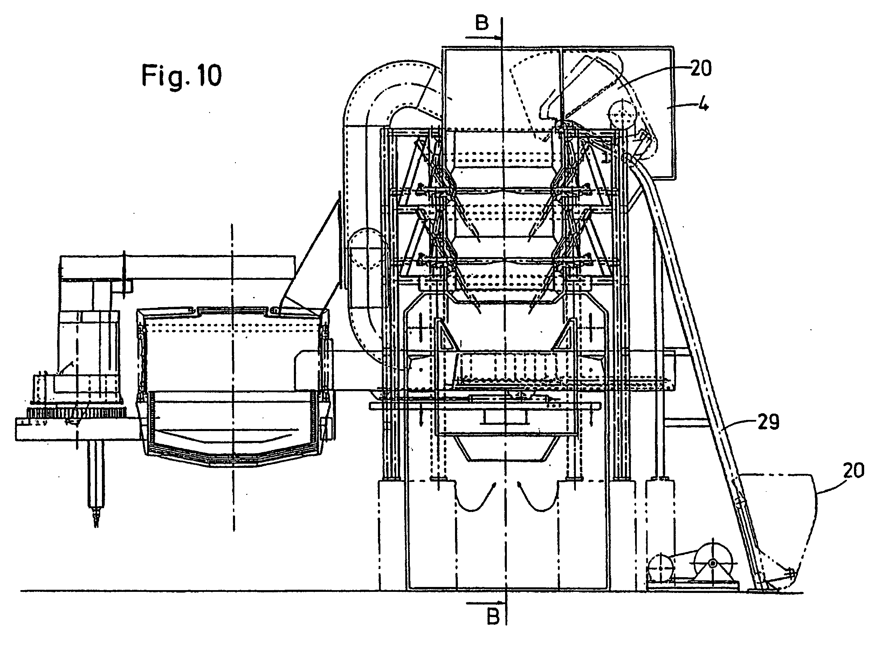

In Figur 10 ist eine vierte Ausführungsform mittels einem Beschickungsbehälter-Schrägaufzugsystem dargestellt. Die Behälter 20 werden über zwei unabhängig arbeitende Schrägaufzüge 29 und 30 in die Vorkammer eingefahren, die abdichtend die vollständigen Behälter aufnimmt.

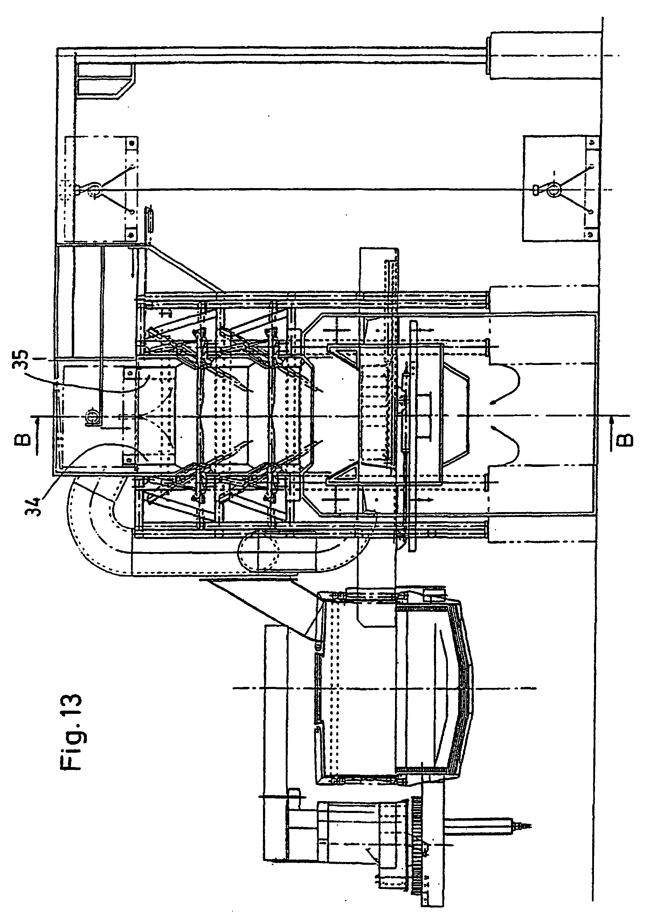

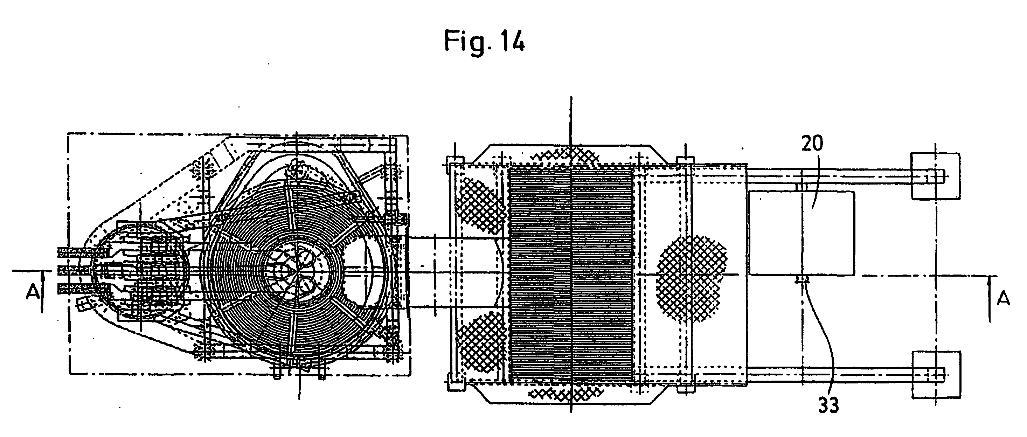

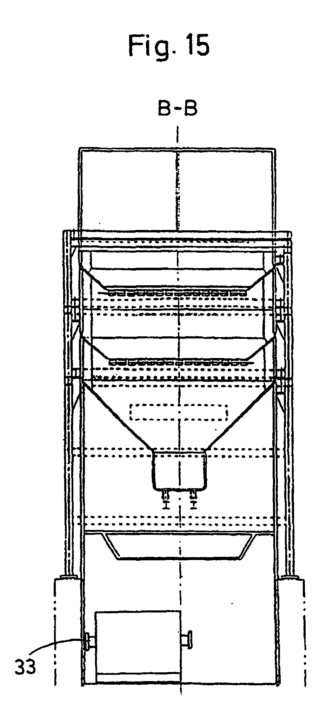

Die Figuren 13 bis 15 zeigen eine fünfte Ausführungsform einer Vorwärmvorrichtung mit geteilter oberer Kammerabteilung und einer ersten Art des Beschikkungsbehälter-Kransystem. Wie bei Figur 4 ist ein Kransystem vorgesehen mit Mitteln zum vertikalen und horizontalen Bewegen von mindestens einem Behälter 20. Der Behälter 20 weist Angriffsmittel 33 für einen Kran auf. Nach Arretierung des Beschickungsbehälters in der oberen Kammerabteilung wird der Behälter entleert, indem sein Boden, der aus zwei schwenkbaren Bodenklappen 34 und 35 besteht, nach unten geschwenkt wird.

Des weiteren sind in den Figuren 1, 4, 7, 10 sowie 13 die Gattermittel 11a und 11b als fingerartige Elemente 31 gezeigt, die an Schwenkmitteln 32 mit den Kammerwänden befestigt sind.

## Patentansprüche

1. Vorrichtung zum Vorwärmen von Schrott vor dessen Zuführen in einen metallurgischen Ofen (2) hauptsächlich unter Ausnutzung von zurückgewonnener Wärme heißer Abgase, die beim Schmelzprozeß im metallurgischen Ofen entstehen und aus der Ofenauslaßöffnung (12) emittiert werden, umfassend:
- eine Kammer (3) mit einer oberen Abteilung (8) zum Deponieren von kaltem Schrott hierin
mit einer Einlaßöffnung für Heißgas (15), die in Strömungsverbindung mit der Ofenauslaßöffnung (12) steht,
sowie mit einer unteren Abteilung (9) mit Entlademitteln (6) für den erwärmten Schrott (7) sowie einer Auslaßöffnung für das Abgas (16), und Mittel zum Zuführen des erwärmten Schrotts in den Ofen (6);
mit gasdurchlässigen Gattermitteln (11a, 11b) zwischen den Kammerabteilungen (8, 9, 10), die zwischen einer geschlossenen und einer geöffneten Position verfahrbar sind zum Aufnehmen von Schrott und Tragen in der geschlossenen Position während einer bestimmten Verweilzeit, während heißes Abgas aus dem Heißgaseinlaß (15) in die obere Abteilung (8) strömt und durch die Schrottcharge sowie die geschlossenen Gattermittel in die untere Abteilung dringt,
sowie mit Mitteln zum Steuern der gasdurchlässigen Gattermittel zum Öffnen und Herabfallen des Schrotts in die untere Abteilung,
- Mittel (5) zum Zu- und Einführen einer kalten Eisenschrottmischung in die Kammer (3),
- einer Vorkammer (4), die an der oberen Abteilung (8) der Kammer angeordnet ist mit mindestens einer ersten verschließbaren Öffnung (23) zur oberen Kammerabteilung sowie mindestens einer weiteren zweiten verschließbaren Öffnung (22) zum Einführen einer Charge von kaltem Schrott mittels der Zuführmittel (5), wobei die jeweilige Charge von der Vorkammer (4) aufnehmbar ist, sowie Mitteln zur kontrollierten Änderung der Gas-, Druckund/oder Temperaturverhältnisse in der Vorkammer, wobei die Öffnungen der Vorkammer als Schleuse betätigbar sind.

2. Vorrichtung nach Anspruch 1;
**dadurch gekennzeichnet,**
**daß** die Zuführmittel für die kalte Eisenschrottmischung ein Beschickungsbehälter-Kransystem umfassen, das sich zusammensetzt aus mindestens einem Kranelement (17) zur vertikalen und horizontalen Verfahrbewegung von mindestens einem Beschickungsbehälter (20).

3. Vorrichtung nach Anspruch 1,
**dadurch gekennzeichnet,**
**daß** die Zuführmittel für die kalte Eisenschrottmischung ein Beschickungsbehälter-Schrägaufzugsystem umfassen, das sich zusammensetzt aus mindestens einem Schrägaufzug (29, 30), der mit jeweils einem permanenten Schrottbeschickungsbehälter (20) ausgerüstet ist, der von der Vorkammer (4) vollständig aufnehmbar ist.

4. Vorrichtung nach Anspruch 2 oder 3,
**dadurch gekennzeichnet,**
**daß** der Verfahrweg und/oder Kippweg des jeweiligen Beschickungsbehälters innerhalb der Vorkammer bzw. der oberen Kammerabteilung steuerbar und diskontinuierlich einstellbar ist.

5. Vorrichtung nach Anspruch 2,
**dadurch gekennzeichnet,**
**daß** der oder die mittels des Kransystems geförderten Beschickungsbehälter mit einem lösbaren Boden (21, 23) versehen sind, der in der Entladeposition des Beschickungsbehälters zum Entleeren horizontal verschiebbar ist.

6. Vorrichtung nach Anspruch 2,
**dadurch gekennzeichnet,**
**daß** der oder die mittels des Kransystems geförderten Beschickungsbehälter mit einem Boden versehen sind, der aus zwei Klappen (34, 35) besteht, die in der Entladeposition des Beschickungsbehälters zum Entleeren nach unten aufklappbar sind.

7. Vorrichtung nach Anspruch 2,
**dadurch gekennzeichnet,**
**daß** der oder die mittels des Kransystems geförderten Beschickungsbehälter durch eine Kippbewegung in die obere Kammerabteilung entleerbar sind.

8. Vorrichtung nach Anspruch 1;
**dadurch gekennzeichnet,**
**daß** Mittel zur Gewichts- und/oder Füllstandsüberwachung der Schrottmenge in den Behältern vor deren Beschickung vorgesehen sind.

9. Vorrichtung nach Anspruch 1,
**dadurch gekennzeichnet,**
**daß** sich die obere Kammerabteilung in einen Entladebereich (8a) sowie einen Schrottsammelbereich (8b) oberhalb der ersten Gattermittel (11a) zusammensetzt, daß der Entladebereich eine sich vertikal erstreckende Trennwand 28) aufweist, und in den ersten (26) sowie zweiten Teil (27) des Entladebereichs jeweils abwechselnd Heißgas eingeleitet und Schrott chargiert wird.

10. Vorrichtung nach einem der vorhergehenden Ansprüche;
**dadurch gekennzeichnet,**
**daß** die Gattermittet (11a, 11b) zwei gegenüberliegend spiegelbildlich angeordnete Reihen aufweisen, die sich aus nebeneinander angeordneten fingerartigen Elementen (31) zusammensetzen, deren jeweiliges erstes Ende über Schwenkmittel (32) an sich gegenüberliegenden Kammerwänden angeordnet ist und deren zweites Ende in die Kammer hineinragt, wobei es sich bei den Kammerwänden um die handelt, die dem metallurgischen Ofen zugewandt bzw. abgewandt sind.

## Claims

1. Device for the preheating of scrap before the latter is fed into a metallurgical furnace (2) mainly using the recuperated heat from hot off gases that are produced during the melting process in the metallurgical fumace and that are emitted out of the furnace outlet opening (12), comprising:
- a chamber (3),
with a top compartment (8) for depositing cold scrap therein
with an inlet opening for hot gas (15) that is arranged in a flow connection with the fumace outlet opening (12),
as well as with a bottom compartment (9) with unloading means (6) for the heated scrap (7) as well as with an outlet opening for the off gas (16) and with a means to feed the heated scrap into the furnace (2),
with gas-pervious grating systems (11a, 11b) between the chamber compartments (8, 9, 10) that are shiftable between a closed and an opened position to take up and carry scrap in the closed position during a particular dwell time while hot off gas flows out of the hot-gas inlet (15) into the top compartment (8) and penetrates the scrap charge as well as the closed grating systems into the bottom compartment,
as well as with means to control the gas-pervious grating systems to allow them to open and the scrap to fall into the bottom compartment,
- means for the feed and input of a cold iron-scrap mix into the chamber (5),
- a prechamber (4) arranged at the top chamber compartment (8),
with at least one first closable opening (23) to the top chamber compartment as well as with at least one further second closable opening (22) for the input of a charge of cold scrap by the feeding means (5), it being possible for each charge to be taken up by the prechamber (4),
as well as with means for the controlled change of the gas, pressure and/or temperature conditions in the prechamber, the openings of the prechamber being workable as a sluice.

2. Device as in claim 1;
**characterised in**
**that** the feeding means for the cold iron-scrap mix embraces a charging-box crane-system consisting of at least one crane element (17) for the vertical and horizontal traversing movements of at least one charging box (20).

3. Device as in claim 1,
**characterised in**
**that** the feeding means for the cold iron-scrap mix comprises a charging-box inclined elevator-system that consists of at least one inclined elevator (29, 30) that is equipped with one scrap-charging box (20) each that can be fully taken up by the prechamber(4).

4. Device as in claim 2 or 3,
**characterised in**
**that** the traversing and/or tipping path of each charging box is adjustable in a controlled manner and discontinuously within the prechamber and the top chamber compartment.

5. Device as in claim 2,
**characterised in**
**that** the charging box or boxes conveyed by the crane system is/are equipped with a releasable floor (21, 23) that is shiftable horizontally in the unloading position of the charging box for emptying purposes.

6. Device as in claim 2,
**characterised in**
**that** the charging box or boxes conveyed by means of the crane system is/are equipped with a floor that comprises two flaps (34, 35) that open downwards in the unloading position of the charging box for emptying.

7. Device as in claim 2,
**characterised in**
**that** the charging box or boxes conveyed by means of the crane system can be emptied into the top chamber compartment by a tipping movement.

8. Device as in claim 1,
**characterised in**
**that** means for the monitoring of the weight and/or the filling level of the scrap quantity are provided in the boxes before it is charged.

9. Device as in claim 1,
**characterised in**
**that** the top chamber compartment comprises an unloading area (8a) as well as a scrap collecting area (8b) above the first grating system (11a), that the unloading area possesses a partition wall (28) which is arranged vertically and that hot gas is introduced and scrap charged alternately into the first (26) and second part (27) of the unloading area respectively and vice-versa..

10. Device as in one of the aforementioned claims,
**characterised in**
**that** the grating systems (11a, 11b) possess two rows arranged in a mirror-image form opposite to each other and comprising elements (31) arranged adjacent to each other and whose first end in each case is arranged using swivelling means (32) on chamber walls opposite to each other and whose second end extends into the chamber, the walls being the ones that face toward or away from the metallurgical furnace.

## Revendications

1. Dispositif de préchauffage des ferrailles avant leur acheminement vers un four métallurgique (2), en utilisant principalement de la chaleur récupérée de gaz d'échappement chauds qui se forment lors du processus de fusion dans le four métallurgique et sont émis par l'ouverture de sortie du four (12), englobant :
- une chambre (3) comprenant une division supérieure (8) servant à y déposer la ferraille froide
comportant une ouverture d'entrée pour le gaz chaud (15) qui est en relation de flux avec l'ouverture de sortie du four (12),
ainsi qu'une division inférieure (9) comportant des moyens de déchargement (6) pour la ferraille réchauffée (7) ainsi qu'une ouverture de sortie pour le gaz d'échappement (16), et des moyens d'acheminement de la ferraille réchauffée vers le four (6) ;
des moyens grillagés laissant passer le gaz (11a, 11b) entre les divisions de la chambre (8, 9, 10), qui peuvent être déplacés entre une position fermée et une position ouverte pour recevoir la ferraille et la porter en position fermée pendant un certain temps de séjour, tandis que du gaz d'échappement chaud afflue à partir de l'entrée de gaz chaud (15) vers la division supérieure (8) et pénètre à travers la charge de ferraille et les moyens grillagés fermés dans la division inférieure,
ainsi que des moyens de commande des moyens grillagés laissant passer le gaz afin d'ouvrir et de faire tomber la ferraille dans la division inférieure,
- des moyens (5) d'acheminement et d'introduction d'un mélange de ferraille froid dans la chambre (3),
- une pré-chambre (4) qui est disposée dans la division supérieure (8) de la chambre, comportant au moins une première ouverture pouvant être fermée (23) sur la division supérieure de la chambre ainsi qu'au moins une deuxième autre ouverture pouvant être fermée (22) pour l'introduction d'une charge de ferraille froide au moyen des moyens d'acheminement (5), la charge respective pouvant être prise en charge par la pré-chambre (4), ainsi que des moyens de modification contrôlée des rapports de gaz, pression et/ou température dans la pré-chambre, les ouvertures de la pré-chambre étant actionnables comme un sas.

2. Dispositif selon la revendication 1,
**caractérisé en ce que**
les moyens d'acheminement pour le mélange de ferraille froide englobent un système de grue à conteneur de chargement qui est composé d'au moins un élément de grue (17) pour le déplacement vertical et horizontal d'au moins un conteneur de chargement (20).

3. Dispositif selon la revendication 1,
**caractérisé en ce que**
les moyens d'acheminement pour le mélange de ferraille froide englobent un système d'élévateur à plan incliné à conteneur de chargement qui est composé d'au moins un élévateur à plan incliné (29, 30) qui est équipé respectivement d'un conteneur de chargement de ferraille permanent (20), qui peut être entièrement intégré dans la pré-chambre (4).

4. Dispositif selon la revendication 2 ou 3,
**caractérisé en ce que**
la trajectoire de déplacement et/ou trajectoire de basculement du conteneur de chargement respectif peut être commandée et réglée en discontinu à l'intérieur de la pré-chambre ou de la division supérieure de la chambre.

5. Dispositif selon la revendication 2,
**caractérisé en ce que**
le ou les conteneurs de chargement transportés au moyen du système de grue sont munis d'un fond détachable (21, 23) qui peut être décalé horizontalement en position de déchargement du conteneur de chargement pour le vider.

6. Dispositif selon la revendication 2,
**caractérisé en ce que**
le ou les conteneurs de chargement transportés au moyen du système de grue sont munis d'un fond qui consiste en deux battants (34, 35) qui peuvent être rabattus vers le bas en position de déchargement du conteneur de chargement pour le vider.

7. Dispositif selon la revendication 2,
**caractérisé en ce que**
le ou les conteneurs de chargement transportés au moyen du système de grue peuvent être vidés par un mouvement de basculement dans la division supérieure de la chambre.

8. Dispositif selon la revendication 1,
**caractérisé en ce que**
des moyens de contrôle du poids et/ou du niveau de remplissage de la quantité de ferraille dans les conteneurs sont prévus avant leur chargement.

9. Dispositif selon la revendication 1,
**caractérisé en ce que**
la division supérieure de la chambre est composée d'une zone de déchargement (8a) ainsi que d'une zone d'accumulation de ferraille (8b) au dessus du premier moyen grillagé (11a), que la zone de déchargement présente une paroi séparatrice (28) s'étendant verticalement, et que respectivement, en alternance, du gaz chaud est introduit et de la ferraille chargée dans la première (26) ainsi que dans la deuxième partie (27) de la zone de déchargement.

10. Dispositif selon une des revendications précédentes,
**caractérisé en ce que**
les moyens grillagés (11a, 11b) présentent deux rangées disposées l'une en face de l'autre en miroir qui sont composées d'éléments en forme de doigts (31) disposés les uns près des autres dont la première extrémité respective est disposée à l'aide de moyens de pivotement (32) sur les parois opposées de la chambre et dont la deuxième extrémité dépasse dans la chambre, sachant qu'il s'agit pour les parois de la chambre de celles qui sont tournées vers le four métallurgique ou détournées de celui-ci.
